(19) Europäisches Patentamt
European Patent Office
Office européen des brevets

(11) Publication number: 0 289 142
A2

(12) # EUROPEAN PATENT APPLICATION

(21) Application number: 88302831.8

(22) Date of filing: 30.03.88

(51) Int. Cl.4: C08K 5/00 , C08K 3/00 , C08L 59/00

(30) Priority: 03.04.87 US 34523

(43) Date of publication of application: 02.11.88 Bulletin 88/44

(84) Designated Contracting States: AT BE CH DE ES FR GB GR IT LI LU NL SE

(71) Applicant: HOECHST CELANESE CORPORATION
Route 202-206 North
Somerville, N.J. 08876(US)

(72) Inventor: Natarajan, Kavilipalayam M.
3 Overhill Drive
N. Brunswick New Jersey(US)

(74) Representative: De Minvielle-Devaux, Ian Benedict Peter et al
CARPMAELS & RANSFORD 43, Bloomsbury Square
London WC1A 2RA(GB)

(54) **Polyacetal molding compositions.**

(57) An improved polyacetal molding resin includes a plurality of stabilizers to enhance properties. The composition includes at least about 90 wt. percent acetal polymer, a lubricant, a hindered phenol as an antioxidant and synergistic amounts of a metal hydroxy carboxylate and a nitrogen containing stabilizer selected from the group consisting of amidine and terpolymers of caprolactam, hexamethylene diamine adipate, and hexamethylene diamine sebacate. In certain aspects of the invention, there is provided antistatic agents such as polyethylene glycol and glyceryl monostearate.

EP 0 289 142 A2

# IMPROVED POLYACETAL MOLDING COMPOSITIONS

## Technical Field

The present invention relates to polyacetal compositions, and more specifically, to stabilized molding compositions with superior color stability, mold-release characteristics and antistatic properties.

## Background of the Invention

Molding compositions comprising acetal polymers have been in commercial use for many years. They have applications in a wide variety of end-uses, for example, in automotive applications they have been used for producing bumper extensions and instrument panels; in plumbing applications they have been used to produce valves, shower assemblies, flush tank components, faucets and pipe fittings; and in more general use, polyacetal compositions have been found useful for making tool components and household or personal products such as combs, fast boiling electric kettles, hangers and like articles.

Acetal polymers, or oxymethylene polymers, as they are sometimes referred to, have receiving units of the formula $-CH_2O-$and may be prepared in a variety of ways from formaldehyde or related compounds with or without other monomers. High molecular weight acetal copolymers have been prepared, for example, by polymerizing trioxane (the cyclic form of formaldehyde) with about 2% ethylene oxide.

The unmodified polymer tends to suffer from some thermal, oxidative and ultraviolet degradation during molding or subsequent use of an article made therefrom which adversely affects its color and mechanical properties. So, also, articles formed from unmodified polyacetal resins tend to accumulate static changes, making them unsuitable for certain applications such as magnetic tape reels where such properties are important.

To alleviate some of the foregoing shortcomings, various means have been employed to obtain better properties. U.S. Patents Nos. 3,313,767 and 4,342,680 are illustrative in this regard. In U.S. Patent No. 3,313,767 to Berardinelli et al., there are disclosed molding compositions comprising a polyacetal copolymer, an amidine compound as a thermal stabilizer, together with alkylene bisphenols as antioxidants; while in U.S. Patent No. 4,342,680 to Sugio et al. there are described polyacetal molding compositions stabilized with a triazine, a hindered phenol and certain metal salts.

While there have been considerable advancements in the field over the last few decades, conventional polyacetal resins do not have the optimal combination of properties in terms of thermal or color stability and processability, nor in terms of antistatic properties. In particular, presently available resins tend to form an unacceptably high number of color bodies during molding or use, often resulting in a yellowish appearance unsuitable for consumer applications where a white appearance is a high priority. Moreover, commercial resins sometimes will accumulate relatively large static charges on their surface during use so that they cannot be used to form certain moving parts such as precision gear movements or tape reels. Finally, available resins, especially resins with a relatively large amount of stabilizers, tend to leave high levels of mold deposit, leading to high production costs.

Accordingly, it is an object of the present invention to provide a polyacetal resin with better thermal and color stability.

It is another object of the invention to make such resins highly stable against oxidative or ultraviolet degradation of the kind which causes poor color quality.

A further object of the invention is to produce a resin whose surface properties are such that the accumulation of static electric charge thereon is minimal.

Another object of the invention is to provide a polyacetal polymer with superior mold release performance.

Still further objects and advantages of the invention will become readily apparent from the description which follows hereinafter.

Summary of Invention

It has been found that certain combinations of additives impart remarkable properties to polyacetal molding resins, especially in terms of color stability and low mold deposit during processing into articles of manufacture. In particular, acetal polymer molding resins prepared in accordance with the invention include a multicomponent property enhancement package comprising in combination a hindered phenol as an antioxidant, a metal hydroxy carboxylate salt, a lubricant such as an alkylene disstearamide, a nitrogen containing thermal stabilizer, nucleants and antistatic agents.

The acetal polymer may be an oxymethylene homopolymer, e.g., a homopolymer of formaldehyde or trioxane, the hemiformal groups of which have been end-capped by acylation or etherification as disclosed, for example, in U.S. Patent No. 3,170,896. Preferably, however, the acetal polymer is an oxymethylene copolymer prepared by copolymerizing trioxane with 0.1 to 15 mole percent of a cyclic ether having at least two adjacent carbon atoms. Copolymers of this type are described in U.S. Patent No. 3,027,352 of Walling et al. Such copolymers may be described as having at least one chain containing between about 85 and about 99.9 mole percent oxymethylene ($-OCH_2$) units interspersed with between about 0.4 and 15 mole percent of -O-R-units wherein R is a divalent radical containing at least two carbon atoms directly linked to each other and positioned in the chain between the two valences with any substituent in the R radical being inert. The preferred copolymers are those made up of oxymethylene and oxyethylene groups, such as copolymers of trioxane with dioxolane or with ethylene oxide.

Also contemplated as the acetal polymer are terpolymers prepared, for example, by reacting trioxane and a cyclic ether and/or cyclic acetal such as in the preparation of the oxymethylene copolymer, with a third monomer which is a bi-functional compound such as ethylene diglycide, diglycidyl ether and diethers of 2 mols of glycide and 1 mol of formaldehyde, dioxane or trioxane, or diethers of 2 mols of glycide and 1 mol of formaldehyde, dioxane or trioxane, or diethers of 2 mols of glycide and 1 mol of an aliphatic diol with 2 to 8 carbon atoms, advantageously 2 to 4 carbon atoms, or a cycloaliphatic diol with 4 to 8 carbon atoms.

Examples of suitablė bifunctional compounds include the diglycidyl ethers of ethylene glycol, 1,4-butanediol, 1,3-butanediol, cyclobutane-1,3-diol, 1,1-propane-diol, cyclohexane-1, 4-diol and 2-dimethyl-4-dimethyl-cyclobutane-1,-3-diol, with butanediol diglycidyl ethers being most preferred. The bifunctional compound may be used for example in the range of 0.1 to 10 percent based on the weight of the total monomers. The terpolymer may be prepared using the same methods known in the art for preparing the copolymers.

High molecular weight acetal polymers may be prepared in high yields and with rapid reaction rates by the use of catalysts comprising boron fluoride coordinate compounds in which oxygen or sulfur is the donor atom, as described in U.S. Patent No. 2,986,506 of Hudgin et al.

When an oxymethylene copolymer is employed containing carbon-to-carbon bonds in the polymer chain, it is preferable to prestabilize the polymer by subjecting it to a melt hydrolysis as disclosed in U.S. Patents Nos. 3,318,848 of Clark and 3,418,280 of Ogden or solution hydrolysis as disclosed in U.S. Patents 3,174,948 and 3,219,623.

A wide variety of nitrogen-containing stabilizers may be employed in the practice of this invention. Suitable amidine compounds (i.e., a compound containing a carbon atom doubly bonded to one nitrogen compound and singly bonded to another) include the cyano-guanidine compounds such as cyano-guanidine itself and other compounds containing the divalent 1-cyano-3, 3 guanidine radical such as 1-cyano-3-methyl guanidine, 1-cyano-3-ethyl guanidine, 1-cyano-3-isopropyl guanidine, 1 cyano-3,3-diphenyl guanidine, 1-cyano-3-hydroxymethyl guanidine, 1-cyano-3-dodecyl guanidine, 1-cyano-3 (2-hydroxyethyl) guanidine, 1-cyano-3-(2-bromoethyl) guanidine, 1-cyano-3-(m-chlorophenyl) guanidine and 1-3-dicyanoguanidine.

Amine substituted triazines constitute another suitable class of amidine compounds.

The preferred compounds of this class are amine substituted derivatives of symmetrical triazines, including guanamines (2,4-diamino-sym.-triazines), melamine (2,4,6-triamino-sym.-triazine), and substituted melamines. The amino groups may be primary, secondary, or tertiary and other substituents such as hydroxyl substituents may be present. Of course, the amino groups and other substituents must be those which are inert, i.e., will not induce undesirable reactions. Among the specific compounds which are suitable are suitable are 2,4-diamino-6-phenyl-sym.-triazine; (benzoguanamine); 2,4-diamino-6-methyl-sym.-triazine; 2,4-diamino-6-butyl-sym.-triazine; 2,4-diamino-6-benzyloxy-sym.-triazine; 2,4-diamino-6-butoxy-sym.-triazine 2-,4-diamino-6-cyclohexyloxy-sym.-triazine; 2,4-diamino-6-chloro-sym.-triazine; 2,4-diamino-6-mercapto-sym.-triazine; 2,4-dihydroxy-6-amino-sym.-triazine (ammelide); 2-hydroxy 4,6-diamino-sym.-triazine (ammeline); N,N,N'N'-tetracyanoethyl benzoguanamine; 2,4,6-triamino-sym.-triazine (melamine); phenyl melamine; butyl melamine; N,N-diethyl melamine; N,N-di-(2 hydroxyethyl) melamine; N,N-diphenyl

melamine; N,N-diallyl melamine; N,N'N"-trimethyl melamine; N,N,'N"-triethyl melamine; N,N'N"-tri(n-propyl)-melamine; N,N'N"-tri-(n-butyl) melamine; N,N,N'N"-tetramethyl melamine; trimethylol melamine; N,N',N"-triphenyl melamine; and N,N'N"-trimethylolmelamine.

Other suitable nitrogen-containing stabilizers include, for example, polyamides produced by the ternary polymerization of caprolactam, hexmethylene diamine adipate and hexamethylene diamine sebacate, such as those marketed by the DuPont Company of Delaware under the trade name Elvamide. Elvamide is a terpolymer comprising the following components:

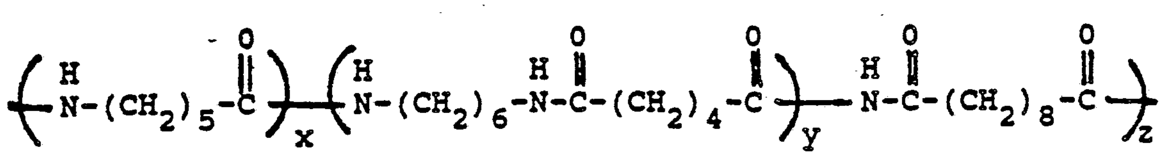

Nylon 6 Nylon 6,6 Nylon 6,10

wherein x, y and z are cardinal numbers. One available grade found particularly suitable is Elvamide 8063.

The amount of nitrogen-containing stabilizer used will vary depending upon the particular acetal polymer used and the degree of stability desired.

A preferred metal hydroxy carboxylate salt for use in accordance with the invention is calcium 12-hydroxy stearate. Other salts may include the sodium, magnesium, calcium or potassium salts of hydroxy carboxylates such as hydroxy laurate, hydroxy palmitate, or hydroxy butyrate.

A suitable class of antioxidants are hindered phenols including bisphenols such as 1,6 hexamethylene bis-(3,5-di-t-butyl-4-hydroxy hydrocinnamate) commercially available from Ciba-Geigy Corporation under the trademark "Irganox 259".

Antistatic agents useful in the compositions described in detail hereinafter include polyethylene glycol and fatty acid esters of alkylene glycols, e.g., glyceryl monostearate. The polyethylene glycol component may be a liquid product having a relatively low molecular weight as well as solid products having a relatively high molecular weight. In general, it is preferred that the molecular weight of the polyethylene glycol is no more than about 10,000. A preferred polyethylene glycol for use in the present invention was a molecular weight of about 3350 and is marketed under the tradename Carbowax 3350.

The polyethylene glycol may be linear or branched, or a linear or branched polypropylene glycol may be used as well as linear or branched ethylene-propylene copolymer glycols. Further, other suitable antistatic agents might include lauric diethanol amide (commercially available from Protameen Chemicals of Totowa, N.J. under the name Protachem L-80-M) or diethanol lauryl amine (commercially available from KAO Soap Ltd. of Japan as "Electrostripper EA")

Suitable lubricants include alkylene disstearamide, long chain amides, waxes, oils and polyether glycides. The preferred mold lubricant is commercially available from Glyco Chemical, Inc. under the trademark "Acrawax C" and is ethylene bisstearamide.

Finally, there is provided in the inventive compositions, a nucleant such as a terpolymer of 97.95 wt. percent trioxane, 2 wt. percent of ethylene oxide and 0.05 wt. percent of butane diol diglycidyl ether, stabilized with 0.5 wt. percent Irganox 259 and 0.1 wt. percent cyanoguanidine. Other nucleants may include talc, other finely divided silicates, powdered sulfates, or carbonates and particulate polytetrafluoroethylene.

Generally speaking, the compositions of the present invention include from about 0.1 to about 2 percent of hindered phenol as an antioxidant; from about 0.01 to about 0.3 wt. percent of a metal hydroxy carboxylate salt; from about 0.05 to about 1 wt. percent lubricant; from about 0.1 to about 2 wt. percent of a nucleant; from about 0.2 to about 3 weight percent of certain antistatic agents; and from about 0.002 to about 2 wt. percent of a nitrogen containing stabilizer compound.

More typically, the inventive compositions include from about 0.2 to about 1 wt. percent of a hindered phenol; from about 0.05 to about 0.15 wt. percent of a metal hydroxy carboxylate salt; from about 0.1 to about 0.5 wt. percent of a lubricant; from about 0.3 to about 1.8 wt. percent of a nucleant; from about 0.5 to about 2.0 wt. percent of certain antistatic agents and from about 0.005 to about 1.5 wt. percent of a nitrogen containing stabilizer compound.

Preferably this is from about 0.3 to about 0.6 wt. percent of a hindered phenol; about 0.1 wt. percent of a metal hydroxy carboxylate salt; about 0.2 wt. percent of a lubricant; from about 0.4 to about 1.5 wt. percent of a nucleant; from about 0.8 to about 1.4 wt. percent antistatic agent; and from about 0.01 to about 1 wt. percent of specified nitrogen containing stabilizers included in compositions prepared in accordance

with the invention.

The molding compositions may be suitably prepared by any conventional mixing or compounding procedure that will result in an intimate mixture of the components. Preferably, dry or melt blending procedures are used. For example, the above-noted additives can be dry mixed with acetal polymer (in the form of chips, pellets, granules or powder) typically at room temperature, and the resulting mixture melt blended in any conventional type extrusion equipment, which is heated to a temperature of anywhere from about 180°C to about 230°C and preferably from about 185° to about 205°C. The polyacetal molding composition resulting from the compounding procedures is then comminuted mechanically, for example, by chopping, pelletizing or grinding into granules, pellets, chips, flakes or powders.

The molding compositions of the present invention may be processed in the thermoplastic state, for example by injection or extrusion molding into shaped articles, for example, into bars, tubes, gears or magnetic tape reels and the like.

## Detailed Description

The following examples illustrate specific advantages of the inventive compositions. All percentages given in the examples and in the remainder of the specification are by weight of the total composition unless otherwise indicated.

Control Examples A and B

### Example A

Acetal polymer flake was prepared by copolymerizing trioxane with 2 wt. percent ethylene oxide at 100°C degrees for 1-2 minutes to prepare an acetal polymer. The polymer was hydrolyzed by conventional methods, e.g., solution or melt hydrolysis and the polymer had a melt index of 27 g/10 min. as measured by ASTM test method D 1238. Subsequently, the polymer was flaked and dry mixed in a V-cone blender for about five minutes with 0.55% Irganox 259, 0.1% calcium 12-hydroxy stearate, 0.2 percent Acrawax C and 0.5 percent of a terpolymer composition consisting of 97.95 wt. percent trioxane, 2 wt. percent ethylene oxide and 0.05 wt. percent of butanediol diglycidyl ether. The terpolymer nucleant composition is stabilized with 0.5 wt. percent Irganox 259 and 0.1 wt. percent cyanoguanidine. The mixture was then melt blended in an extruder at 190°C and the injection molded into 2" discs for color testing. A 2-1/2" single or twin screw extruder may be used.

### Example B

Components and procedure were the same as in Example A, except that there was included in the composition 0.5% of Irganox 259 instead of 0.55%. That is, the amounts of other additives, including the terpolymer composition, were the same.

### Examples I through IV

In Examples I through IV the same materials and procedure as noted above in Example A were used, except that in Example I, 0.01 percent cyanoguanidine was added; in Example II, 0.02 percent of cyanoguanidine was added; in Example III, 0.05 percent of cyanoguanidine was added and in Example IV, 0.1 percent of cyanoguanidine was added. In each case, the final product was extruded into a thin disk as before.

**Examples V through VII**

The same components and procedures as in Example B were used, except that in those examples, melamine (2,4,6-triamino-sym-triazine) was added in various amounts. In Example V, 0.05% melamine was added; in Example VI, 0.02% melamine was added; and in Example VII, 0.035% melamine was added. Discs for color testing were prepared in each of these cases.

**Heat Aging Characteristics**

The discs prepared from the compositions A, B and I through VII above were approximately 2" diameter discs and approximately 1/8 inches in thickness, such as are suitable for use in connection with an Optical Sensor Model D25 available from the Hunter Associates Laboratory Inc. Company of Reston, Virginia. The Optical Sensor Model D25 is calibrated against standard samples and is capable of measuring L, a, and b values. The L scale is a measure of lightness and varies from 100 for perfect white to 0 for black. A measures redness when plus, gray when zero, greenness when minus; while the b scale measures yellowness when plus, gray when zero, blueness when minus. In the present application, the b scale is of paramount interest inasmuch as yellowing is a primary color problem associated with polyacetal compositions for use in certain consumer articles where it is desirable to maintain a stable appearance over time.

Each of the discs prepared in Examples A, B and I through VII above were heat aged for prolonged periods in an oven at 116°C. The Hunterlab Color b values were measured for the scales before heat aging and then periodically thereafter, as shown in Table I below.

**Table I - Heat Aging Results**

| Example | Hunter Color "b" after Heat Aging (Hrs.) at 116°C | | | | | |
|---|---|---|---|---|---|---|
| | Hours | | | | | |
| | 0 | 25 | 49 | 75 | 122 | 150 |
| A | 2.2 | 4.3 | - - | 8.0 | - - | 21.0 |
| I | 2.3 | 3.7 | - - | 5.7 | - - | 11.6 |
| II | 2.3 | 3.1 | 4.2 | 5.0 | - - | 11.2 |
| III | 2.3 | 2.6 | 3.3 | 4.0 | - - | 7.2 |
| IV | 2.3 | 2.6 | 3.3 | 4.0 | - - | 6.5 |
| B | 2.44 | 4.32 | 8.55 | - - | 21 | - - |
| V | 2.69 | 4.0 | 5.0 | - - | 13 | - - |
| VI | 2.2 | 3.6 | 5 | - - | 13 | - - |
| VII | 2.4 | 3.4 | 4.7 | - - | 12 | - - |

Generally speaking, some yellowing is visually apparent when the Hunterlab color b value approaches about 5; as the "b" value approaches about 10, strong yellowing is noted; and an article tends to appear

brownish when the b value is above about 15. As can be seen from the above table, compositions stabilized in accordance with the invention have excellent resistance to discoloration under thermal stress over prolonged time periods. It has also been found that Elvamide 8063 can be used in place of cyanoguanidine or melamine provided that it is used in relatively high concentrations, above about 0.5 percent, and preferably between about 0.6 and 0.8 percent by weight of the total composition.

In addition to the superior resistance to yellowing during heat aging, compositions produced in accordance with the invention exhibit excellent mechanical properties and processability in terms of lubricity, flowability, low mold deposit. Moreover, articles formed from the inventive compositions are highly stable against ultraviolet (U.V.) radiation.

It has been further found that antistatic agents enhance the properties of the compositions according to the invention to make them suitable for molding video tape reels, fine gear movements and like articles in terms of their resistance to accumulating static charge without adversely affecting the heat aging characteristics set forth above.

In this regard, the following formulation has been found to have excellent color stability, moldability as well as antistatic properties:

| | |
|---|---|
| Acetal polymer (as in Example A) | 96.91% |
| Irganox 1010* | 0.4% |
| Acrawax C | 0.2% |
| Calcium 12-hydroxy Stearate | 0.1% |
| Terpolymer nucleant (as in Example A) | 1.1% |
| Melamine | 0.04% |
| Polyethylene Glycol (MW=appx. 3350) | 0.9% |
| Glyceryl Monostearate | 0.35% |

*Commercially available from the Ciba-Geigy Company, Tetrakis [Methylene (3,5-di-t-butyl-4 hydroxy cinnamate)] methane.

Thus, the objects of the present invention are realized by formulations which provide superior properties in polyacetal molding compositions than heretofore known.

While various embodiments of the present invention have been described in detail hereinabove, modifications will be readily apparent to those of skill in the art. Such modifications are within the spirit and scope of the present invention which is limited and defined only by the appended claims.

## Claims

1. A molding composition consisting of at least 90 percent by weight of a polyacetal resin, the balance being a property enhancing package melt blended therewith, said package comprising in combination:

a hindered phenol as an anti-oxidant;

a metal hydroxy carboxylate salt wherein said metal is selected from the group consisting of sodium, magnesium, calcium and potassium and wherein said hydroxy carboxylate is selected from the group consisting of hydroxy stearate, hydroxy laurate, hydroxy palmitate and hydroxy butyrate;

a lubricant comprising one or more of an alkylene disstearamide, a long chain amide, a wax, an oil, or a polyether glycide;

a nitrogen containing thermal stabilizer selected from the group consisting of amidines and terpolymers of caprolactam, hexamethylene diamine adipate, and hexamethylene diamine sebacate;

a nucleant selected from the group consisting of sodium bicarbonate, finely divided polytetrafluoroethylene powder, talc, and terpolymers of trioxane, ethylene oxide and butanediol diglycidal ether; and

as an antistatic agent, polyethylene glycol, a fatty acid ester of an alkylene glycol, a polypropylene glycol, a polyethylene-polypropylene copolymer glycol, lauric diethanol amide, diethanol lauryl amine or combinations thereof.

2. The composition according to claim 1, wherein said polyacetal resin includes from about 0.4 to about 15 mole percent of -O-R units wherein R is a divalent radical containing at least two carbon atoms directly linked to each other and positioned in the chain between the two valences with any substituent in the R radical being inert.

3. The composition according to claim 1, wherein said polyacetal resin is prepared by copolymerizing trioxane with about two weight percent ethylene oxide.

4. The composition according to claim 1, wherein said polyacetal resin is a terpolymer prepared by reacting trioxane with a cyclic ether and a bifunctional compound selected from the group consisting of ethylene diglycide, diethers of 2 mols diglycidyl ether and 1 mol of formaldehyde, dioxane or trioxane, and diethers of 2 mols of glycide and 1 mol of an aliphatic diol with 2 to 8 carbon atoms.

5. The molding composition according to claim 1, wherein said amidine is cyanoguanidine.

6. The molding composition according to claim 5, wherein said composition includes from about 0.02 to about 0.05 percent by weight cyanoguanidine, based on the total weight of the composition.

7. The composition according to claim 1, wherein said amidine is melamine.

8. The composition according to claim 7, wherein said composition includes from about 0.01 to about 0.05 percent by weight melamine, based on the total weight of the composition.

9. The composition according to claim 1, wherein said antistatic agent consists essentially of a mixture of polyethylene glycol and glyceryl monostearate, which mixture is present in an amount of from about 0.4 to about 2 percent by weight, based on the total weight of the composition.

10. The composition according to claim 1, wherein said metal hydroxy carboxylate salt is calcium 12-hydroxy stearate.

11. In a polyacetal molding composition of the class including a hindered phenol as an antioxidant and one or more lubricants such as alkylene disstearamides, waxes, oils, long chain amides or polyether glycides, the combination comprising a metal hydroxy carboxylate, said metal being selected from the group consisting of sodium, potassium, magnesium or calcium; said hydroxy carboxylate being hydroxy stearate, hydroxy laurate, hydroxy palmitate or hydroxy butyrate, and a nitrogen containing stabilizer selected from the group consisting of amidines and terpolymers of caprolactam, hexamethylene diamine adipate, and hexamethylene diamine sebacate, and an antistatic agent selected from the group consisting of a polyethylene glycol, a fatty acid ester of an alkylene glycol, a polypropylene glycol, a polyethylene-polypropylene copolymer glycol, lauric diethanol amide, diethanol lauryl amine or combinations thereof, wherein said metal hydroxy carboxylate is present in an amount sufficient to constitute at least about 0.05 weight present of said composition and said nitrogen containing stabilizer is present in an amount such that it constitutes from about 0.01 to about 1 weight percent of said composition.

12. The composition according to claim 11, wherein said polyacetal resin includes from about 0.4 to about 15 mole percent of -O-R units wherein R is a divalent radical containing at least two carbon atoms directly linked to each other and positioned in the chain between the two valences with any substituent in the R radical being inert.

13. The composition according to claim 11, wherein said polyacetal resin is prepared by copolymerizing trioxane with about two weight percent ethylene oxide.

14. The composition according to claim 11, wherein said polyacetal resin is a terpolymer prepared by reacting trioxane with a cyclic ether and a bifunctional compound selected from the group consisting of ethylene diglycide, diglycidyl ether, diethers of 2 mols of glycide and 1 mol of formaldehyde, dioxane or trioxane, and diethers of 2 mols of glycide and 1 mol of an aliphatic diol with 2 to 8 carbon atoms.

15. The molding composition according to claim 11, wherein said amidine is cyanoguanidine.

16. The molding composition according to claim 15, wherein said composition includes from about 0.02 to about 0.05 percent by weight cyanoguanidine based on the total weight of the composition.

17. The composition according to claim 11, wherein said amidine is melamine.

18. The composition according to claim 17, wherein said composition includes from about 0.01 to about 0.05 percent by weight melamine, based on the total weight of the composition.

19. The composition according to claim 11, wherein said antistatic agent consists essentially of a mixture of polyethylene glycol and glyceryl monostearate, which mixture is present in an amount of from about 0.4 to about 2 percent by weight, based on the total weight of the composition.

20. The composition according to claim 11, wherein said metal hydroxy carboxylate salt is calcium 12-hydroxy stearate.